Europäisches Patentamt

European Patent Office

Office européen des brevets

(11) Publication number: 0 519 255 A2

# EUROPEAN PATENT APPLICATION

(21) Application number: 92109219.3

(22) Date of filing: 01.06.92

(51) Int. Cl.5: G01N 21/89

(30) Priority: 31.05.91 JP 156030/91
31.05.91 JP 156031/91

(43) Date of publication of application:
23.12.92 Bulletin 92/52

(84) Designated Contracting States:
DE FR GB

(71) Applicant: FUJI PHOTO FILM CO., LTD.
210 Nakanuma Minami Ashigara-shi
Kanagawa 250-01(JP)

(72) Inventor: Okamura, Koki, c/o FUJI PHOTO
FILM CO., LTD.
798, Miyanodai, Kaiseimachi,
Ashigarakami-gun
Kanagawa(JP)
Inventor: Iwasa, Masakazu, c/o FUJI PHOTO
FILM CO., LTD.
798, Miyanodai, Kaiseimachi,
Ashigarakami-gun
Kanagawa(JP)
Inventor: Sone, Shiro, c/o FUJI PHOTO FILM
CO., LTD.
798, Miyanodai, Kaiseimachi,
Ashigarakami-gun
Kanagawa(JP)

(74) Representative: Patentanwälte Grünecker,
Kinkeldey, Stockmair & Partner
Maximilianstrasse 58
W-8000 München 22(DE)

(54) Defect inspection system and inspection process.

(57) A defect inspection system for scanning a surface of a test piece to pick up image signals, followed by processing the signals to detect any defects. In order to eliminate noises due to background pattern or topographical feature of the surface of the test piece, spatial-filtering is effected by using a differentiation filter. A background noise discriminator is provided to discriminate the directivity of the topographical feature while referring to the differences in density of respective image signals of the inspected surface, and to define an optimum differentiation filter used for spatial-filtering. In an alternative embodiment, histograms are drawn by plotting the differences to be used for the discrimination of the topographical feature. Also provided is an inspection process in which an optimum differentiation filter is selected by a background noise discriminator and then spatial filtering is effected by using the thus selected differentiation filter not to detect noise signals due to the topographical feature of the test piece.

FIG. 1

## BACKGROUND OF THE INVENTION:

### Field of the Invention;

The present invention relates to a defect inspection system for scanning a test piece to be inspected to pick up image signals which are processed to detect any faults or defects on the surface of the inspected material.

### Related Art;

In the known systems for the inspection of the surface of test piece, such as steel plate, plastics film or paper sheet, the surface to be inspected is optically scanned to detect faults on the surface of the test piece or internal defects of the test piece. In such a known system, image signals obtained by scanning the test piece are compared with a pre-set threshold to discriminate that a defect is present when a particular image signal is above or below the threshold.

However, there arises a case where the image signals have output levels which are fluctuated extensively. For example, when images are read through a CCD line sensor or CCD area sensor, the output levels of the read image signals are extensively fluctuated due to inuniformality of the characteristics of each picture element or the unevenness of the intensity of illumination. The output levels of the signals are also greatly affected by the change in incidence angle of the scanning beam with the surface of the test piece and also by the change in incidence angle of the reflected beam into the optical system. Likewise, the output levels of the image signals are fluctuated due to topographical feature of the scanned surface, which is brought during the fabrication of the test piece and should not be judged as a defect, an example of such topographical feature being trivial undulation or other inserious unevenness on the surface of a rolled steel plate.

When such an intensive fluctuation would occur in the output levels of the image signals, a signal indicating the presence of any fault or defect tends to become obscure as it is compared with the threshold or contrarily a noise signal contained in the image signal picked up during the scanning of normal background portion is judged as if it were an indication of any fault or defect. This causes a probelm of reduction in reliability of the defect inspection operation.

It has been proposed to subject the image signals to spatial-filtering while using a differentiation filter to remove the low frequency components which induce extensive fluctuation of output level. Although the defect detection sensitivity is infact improved by such an differentiation processing, erroneous detection would occur by the topographical feature of the inspected surface. In consideration of the fact that the topographical feature of the inspected surface has a specific directivity, it has been proposed to align the direction of the used differentiation filter with the specific directivity of the topographical feature of the inspected surface to exclude erroneous detection. However, it is cumbersome to detect the directivity of the topographical feature through the operator's eyes. In addition, it is difficult to determine a proper differentiation direction. When the direction of the used differentiation filter is not agreed with the directivity of the topographical feature, inserious change in normal background would be erroneously detected in the form of a noise signal to reduce the reliability of the sensitivity in defect detection operation.

## OBJECTS AND SUMMARY OF THE INVENTION:

An object of this invention is to provide a defect inspection system wherein the image signals are subjected to spatial-filtering while using a differentiation filter which is defined or selected to have an optimum differentiation direction to facilitate reliable defect detection operation at a high sensitivity.

Another object of this invention is to provide a defect inspection system wherein a differentiation filter having an optimum differentiation direction suited for the inspection of the test piece having a particular topographical feature is automatically selected and used in the spatial-filtering to realize reliable defect detection operation at a high sensitivity.

A further object of this invention is to provide a process for detecting any defects at high sensitivity by selectively using a differentiation filter having an optimum differentiation direction suited for the inspection of the test piece having a particular topographical feature.

The object of this invention is attained by the provision of a defect inspection system for scanning a surface of a test piece to pick up image signals from which any defects are detected, which comprises:

(a) an A/D converter for converting analog image signals into digital signals, said analog image signals being picked up by scanning said surface of said test piece;

(b) a background noise discriminator for receiving said digital signals from said A/D converter to find the differences in density of respective image signals and for discriminating the topographical feature of the inspected surface of said test piece while refering to said differences in density of respective image signals;

(c) a spatial filter for spatial-filtering said digital signals through an optimum differentiation filter which is incorporated to have a direction of differentiation to decrease the background noise signals due to the presence of said topographical feature discriminted by said background noise discriminator; and

(d) a defect detector for comparing the differentiated digital signals with a pre-set threshold to detect defects.

The differentiation filter used for spatial-filtering may be defined or selected manually while referring to the output from the background noise discriminator. However, it is desirous that the differentiation filter is defined or selected automatically. For example, plural differentiation filters having different differentiation directions may be stored in a memory so that an optimum differentiation filter is automatically selected depending on the result of discriminating the topographical feature.

The topographical feature of the inspected surface may be discriminated, for example; by comparing the differences in density of adjacent picture elements along the main scanning direction with the differences in density of adjacent picture elements along the subsidiary direction; by comparing the differences in density of the picture elements spaced from one another at a pre-set number of picture elements along the main scaning direction with the differences in density of the picture elements spaced from one another at a pre-set numeber of picture elements along the subsidiary scanning direction; or by comparing the sum of the differences in density along the main scanning direction between each picture element and the average density of all picture elements with the sum of the differences in density along the subsidiary scanning direction between each picture element and the average density of all picture elements. The sum of differences may be calculated by totalizing the absolute values of respective differences or the sum of sqaure numbers of respective differences may be totalized.

Since the image density signals are initially converted into digital signals and then differentiated through a differentiation filter, low frequency components which cause an extensive fluctuation in output level are removed. As a result, the output level of the signals picked up by scanning the normal background area, which might contain some topographical feature, is maintained at a substantially constant level. Any defects can be detected at a high sensitivity by comparing the differentiated signals with a pre-set threshold.

Since the topographical feature of the inspected surface is discriminated by the background noise discriminator which discriminates the topographical feature by comparing the difference in density of successive image signals and selects an optimum differentiation filter used for the subsequent spatial-filtering operation, the sensitivity in inspection of defects is improved by the use of the optimum differentiation filter.

Alternatively, the object of this invention is attained by the provision of a defect inspection system for scanning a surface of a test piece to pick up image signals from which any defects are detected, which comprises:

(a) an A/D converter for converting analog image signals into digital signals, said analog image signals being picked up by scanning said surface of said test piece;

(b) a difference calculator for receiving said digital signals from said A/D converter to find the differences in density of respective picture elements within a certain range of the inspected area along the main scanning direction and along the subsidiary scanning direction;

(c) histogram means for drawing the histograms of the differences in density of respective picture elements along the main scanning direction and along the subsidiary scanning direction;

(d) a background noise discriminator for discriminating the topographical feature of the inspected surface of said test piece by referring to said histograms;

(e) a spatial filter for spatial-filtering said digital signals through an optimum differentiation filter which is incorporated to have a direction of differentiation to decrease the background noise signals due to the presence of said topographical feature discriminated by said background noise discriminator; and

(f) a defect detector for comparing the differentiated digital signals with a pre-set threshold to detect defects.

The histogram used for the discrimination of the topographical feature, may be a histogram of the differences in density along the main and subsidiary directions between adjacent picture elements or between a certain picture element and a picture element spaced by a pre-set number of picture elements from said ceratin picture element, or a histogram of the differences in density between each picture element and the average density of all picture elements. In preparation of the histogram, absolute values of differences or sqaure numbers of differences may be used.

Since the topographical feature of the inspected surface is discriminated by the background noise discriminator which discriminates the topographical feature by referring to the histogram drawn by using the differences in density of respective picture elements and then an optimum differentiation filter is selected correspondingly to the thus discriminated topographical feature, the sensitivity in inspection of defects is improved by the use of the optimum differentiation filter.

The object of the present invention is attained by the processes as defined in Claims 25 and 26 of the appended Claims.

BRIEF DESCRIPTION OF DRAWINGS:

Fig. 1 is a block diagram showing a first embodiment of the invention;

Figs. 2 and 3 are graphic representaions of the output density signal curves processed through the first embodiment;

Fig. 4 is a schematic illustration showing the spatial-filtering process;

Fig. 5 is a schematic illustration showing two examples of the differentiation filters each having 3 x 3 mask size;

Fig. 6 is a graphic representation showing an example of density conversion table;

Fig. 7 shows an area which is scanned to discriminate the topographical feature thereof;

Fig. 8 is a diagramatical illustration showing the operation of discriminating the topographical feature;

Fig. 9 is a block diagram showing the operation sequence processed through the first embodiment of the invention;

Fig. 10 is a block diagram showing a second embodiment of the invention;

Fig. 11 is a block diagram showing the operation sequence processed through the second embodiment of the invention;

Fig. 12 is a graph showing histogram patterns used for the discrimination of topographical feature according to the second embodiment; and

Fig. 13 is a graph showing further examples of histogram patterns.

DESCRIPTION OF PREFERRED EMBODIMENTS:

First Embodiment;

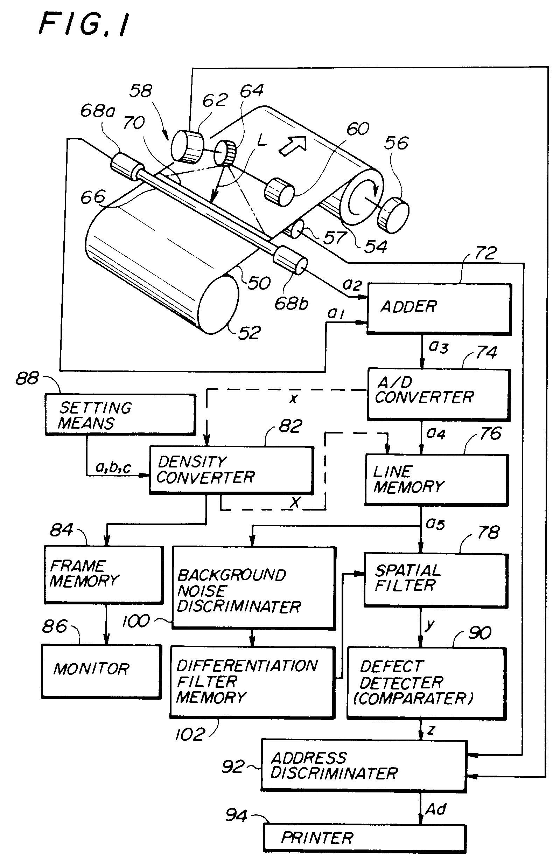

A first embodiment of the invention will be described with reference to Figs. 1 to 9.

Initially referring to Fig. 1, reference numeral 50 designates a test piece, such as steel plate, paper sheet or plastics film, to be inspected. The test piece 50 is supplied from a supply roller 52 and taken up by a take-up roller 54. The take-up roller 54 is driven by a take-up motor 56. The surface of the test piece 50 is scanned by a flying spot type image detector 58 to pick up image signals. The image detector 58 has a laser beam source 60 for generating a scanning laser beam L which is reflected by a rotary mirror (polygonal mirror) 64 to scan the test piece 50 at a constant angular rate along a main scanning direction, i.e.

along the widthwise direction. The beam reflected by the surface of the test piece 50 is received by a light receiving rod 66 and then guided to a pair of light receivers 68 (68a, 68b).

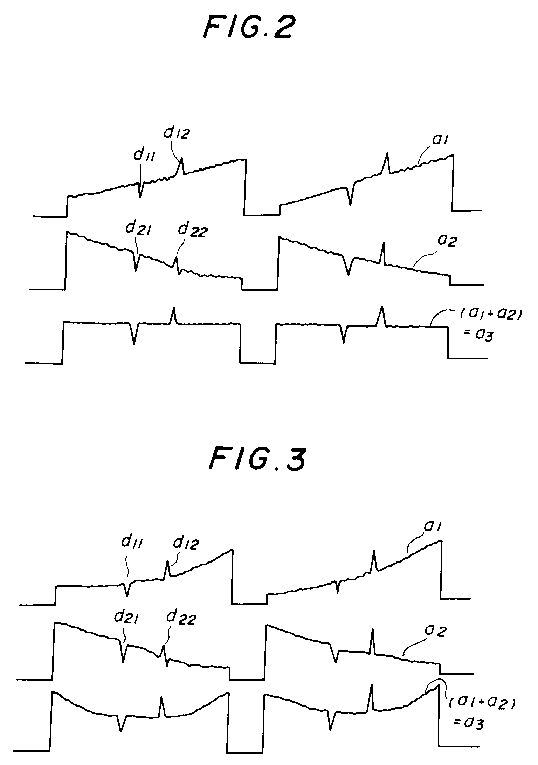

The light receiving rod 66 is disposed vicinal to and parallel to a main scanning line 70 for the scanning beam L so that the beam reflected by the surface of the test piece 50 and received by the rod 66 is totally reflected by the internal surface of the rod 66 to be guided to the ends of the rod 66. Photo-multipliers or like light receivers 68 are attached to the ends of the rod 66 to detect the light quantities of the recived beam. Image signals put out from each light receiver 68 are amplified by a pre-amplifier and a main amplifier (not shown), and then the wave forms thereof are regulated or shapened to be analog image signals $a_1$ and $a_2$ shown in Fig. 2. Each of the signal $a_1$ and $a_2$ includes a series of signals obtained by scanning along the main scanning line 70 appearing at a constant time interval. Signals $d_{11}$, $d_{12}$, $d_{21}$ and $d_{22}$ in Fig. 2 correspond to defects on the surface of the test piece 50.

The levels of respective signals $a_1$ and $a_2$ are lowered as the scanning beam L is remoter from the main scanning line 70, and take higher values as the beam L approches close to the main scanning line 70. In this embodiment, both signals $a_1$ and $a_2$ are added together by an adder 72 to exclude the influence by the change in scanned position on the main scanning line 70.

The added signal $a_3$ is converted into a degital density signal $a_4$ by an A/D converter 74, for example, having 256 tone graduations, and stored in a line memory 76.

The line memory 76 has a memory capacity at least equivalent to the product (N x M) obtained by multiplying the number N of picture elements contained in one main scanning line by the number M, which is a larger number than the number of lines contained in the used spatial filter which will be described hereinafter. The line memory 76 stores these digital signals $a_4$ for every scanning operations, the storing of the signals being effected in synchronism with feeding of the inspection width gate signals. In detail, the line memory 76 has a ring buffer structure so that a new datum is written on the earliest datum as all of the memory areas in the line memory 76 have been filled. The inspection width gate signal indicates the width of inspected area by every scanning along the main scanning line, the inspection width gate signal being fed in synchronism with the rotation of the rotary mirror 64. The line memory 76 may be replaced by a delay circuit for delaying the signals $a_3$ by n lines, delaying being carried out serially one line for every scanning operation along the main scanning line.

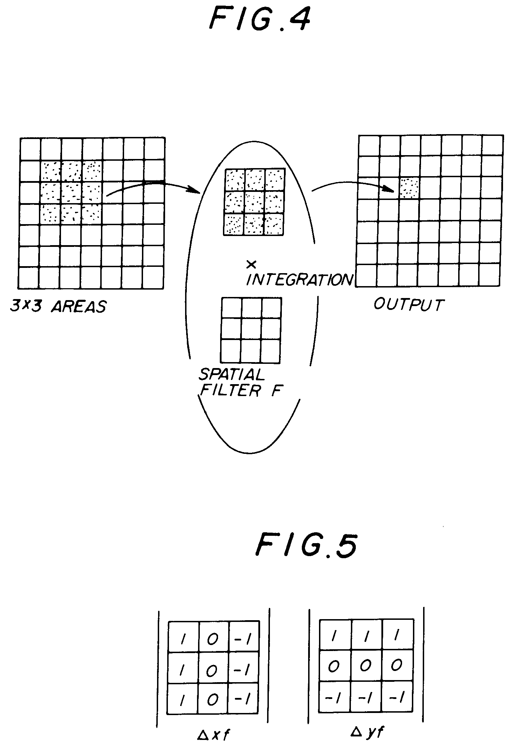

The signal $a_5$ from the line memory 76 is subjected to spatial-filtering by a differentiation filter in the spatial filtering means 78. As shown in Fig. 4, this differentiation processing is effected by covering a spatial filter F on (3 x 3) picture elements including a center picture element now on inspection to obtain the integration product of signals from these (3 x 3) picture elements so that the total sum in taken as the output. Similar operations are repeated from the top left picture element to the right bottom picture element following to the order of raster scanning.

One or more filters each having a overlapping factors as shown in Fig. 5 may be selectively used as the spatial filter used for the spatial-filtering operation. This filter comprises paired two filters, i.e. a filter $\Delta_x f$ for differentiating along the line direction and another filter $\Delta_y f$ for differentiating along the row direction; and the sum of the absolute values of the outputs from both filters, the output from either one of these filter having a larger value, the output from either one of these filters or absolute value of the output from either one of these filters is used as the final output. In this operation, an optimum differentiation filter suited for the discrimination of the topographical feature by a background noise discriminator 100, which will be described hereinafter, is selectively used. As an advantageous result of this filtering process, the contour of each image along both of X and Y directions is claified to improve the defect detection sensitivity carried out by the subsequent operations.

There is a case where the output level of the signal $a_3$ fed from the adder 72 is significantly arcuated, as shown in Fig. 3, due to influences by the change in incident angle of the scanning beam L on the surface of the test piece 50, unevenness of the surface of the test piece 50 due to the texture thereof and the attenuation occurred internally of the guide rod 66. In such a case, a density converter 82 may be incorporated to convert the density of the signal x, which has been already subjected to A/D conversion, while using a predetermined density conversion table, and the signal x processed through the density conversion processing is fed through the line memory 76 to the spatial filter 78 to be subjected to spatial-filtering.

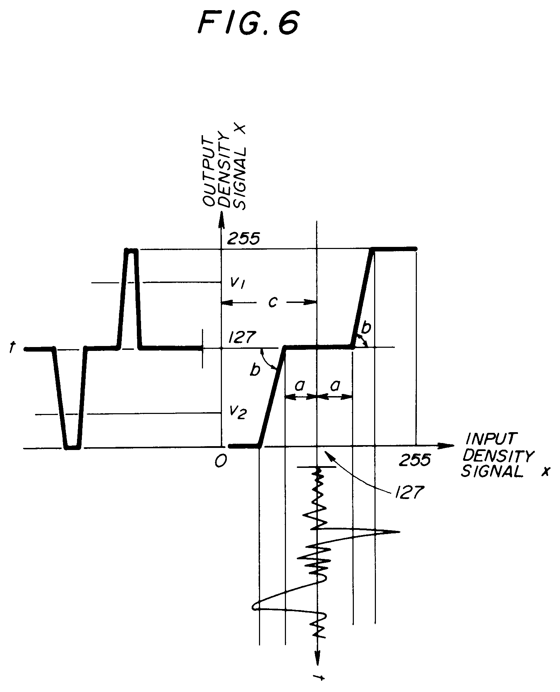

In detail, the signal $a_4$ obtained through A/D conversion is fed to the density converter 82 where it is subjected to density conversion. The output signal X from the density converter 82 is once passed to a frame memory 84 to be stored and then displayed as a converted image on the television monitor 86. The density tone conversion is effected, for example, by using a table having the characteristics shown in Fig. 6. In Fig. 6, the abscissa denotes the density of the input density signal x, and the ordinate denotes the output signal X after subjected to density conversion. Each of these density signals x and X has, for example, 256 tone graduations. In this table, the densities within a range extending to cover a pre-set width 2a, the center line of said pre-set width 2a corresponding to the background density lebel c, are converted into a certain constant density (e.g. the 127th graduation), and the densities out of said range are converted into either one of the maximum value (255the graduation) or the minimum graduation (0th graduation) by the use of a conversion factor (slope) b.

In the illustrated embodiment, the pre-set values a, b and c are shiftable by means of a manually operable setting means 88. Thus, the operator of the system operates the setting means 88 while monitoring the image displayed on the television monitor 86 so that the noises contained in the background field are eliminated.

On the other hand, the signal y obtained by subjecting to spatial-filtering through a spatial filter 78 is deprived of low frequency components contained in the signal X or $a_4$, whereby the defective portion is made distinctive. A defect discriminator 90 is provided to compare this signal y with thresholds $v_1$ and $v_2$ and the portion or surface area of the inspected material is discriminated as defective when $y > v_1$ or $y < v_2$ (see Fig. 6).

In lieu of discriminating the defect by the use of the threshold $v_1$ or $v_2$ relating to the density of the image, any defect may also be discriminated by setting a threshold relating to the number of picture elements within a certain constant mask size (mask size defining the number of thresholds). For instance, a certain inspected picture element is sorted as having a value of 1 when the number of picture elements each having a density more than the threshold $v_1$ or a density less than the threshold $v_2$ is more than a pre-set number (for example 4), whereas the inspected picture element is sorted as a value of 0 when the number of picture elements each having a density more than the threshold $v_1$ or a density less than the threshold $v_2$ is not more than the same pre-set number.

The mask size of the spatial filter used in this step is not limited to the 3 x 3 size as used in the illustrated embodiment. A mask having 4 x 4, 5 x 5 size may be used depending on the pattern of the topographical feature.

This signal z indicating any defect is fed to an address discriminator 92 to determine the address Ad of the defect. This address Ad may be determined by the combination of the output from a feed rate sensor (pulse generator) 57 and a rotating angle of a motor 62. However, since there is some time delay required for the processing of the signals, such a time delay must be taken into account when the address Ad is determined. For example, the ordinates of respective signals are stored together with the signals $a_4$ and X in the line memory 76 and the frame memory 84, so that the ordinates of each defect can be read from these memories 76 and 84. The results are recorded in a recorder, such as a printer 94.

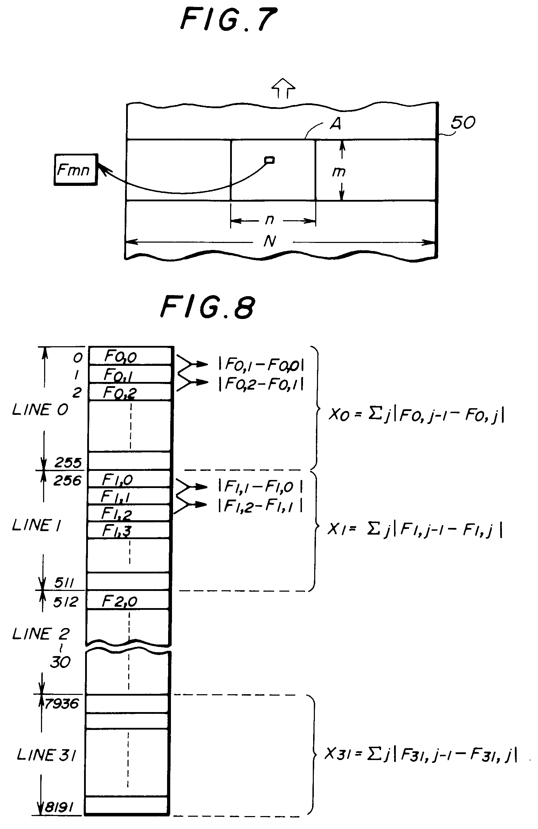

A background noise discriminator 100 for selecting the optimum differentiation filter used in the spatial filter 78 will now be described with reference to Figs. 7, 8 and 9. Discrimination of the topographical feature of the inspected surface by this background noise discriminator 100 is effected by scanning a pre-selected area A containing (n x m) picture elements and located at the substantial center of the fore end of the test piece 50, as shown in Fig. 7. The number n of the picture elements along the main scanning direction (X direction) is set to, for example, 256, and the number m of the picture elements (i.e. the scanned row number) along the subsidiary scanning direction (Y direction) is set to, for example, 32. The line number M which can be stored in the line memory 76 is larger than or equal to the line number m. The density of the picture element (p, q) within this area A is indicated by $F_{p,q}$.

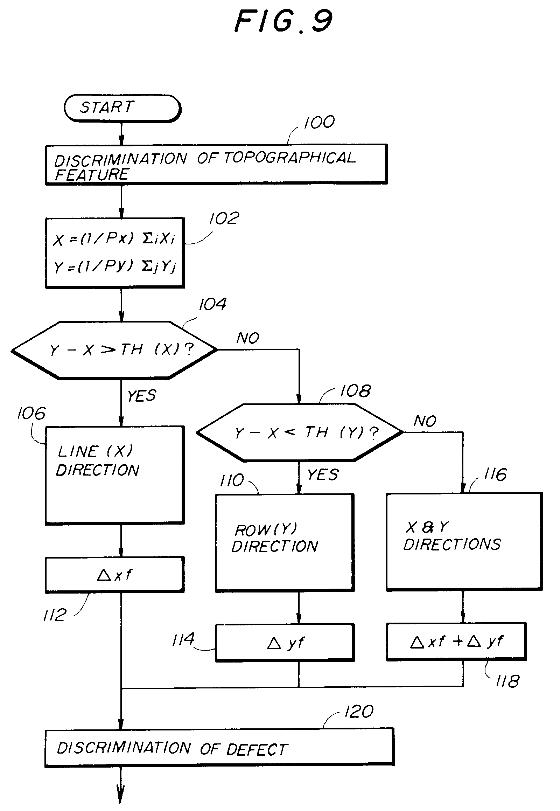

In the background noise discrimination mode (Step 100 in Fig. 9), the density F(m, n) of a specific picture element within the area A is read from the line memory 76, and the differences in density, namely the differences in density of the specific picture element and the adjacent picture elements aligned along the main and subsidiary scanning directions, are determined. The arithmetic operation for the determination of difference in density along the main scanning direction is shown in Fig. 8.

The densities F of respective picture elements 0 to 255 along the line 0 (i = 0) are represented by $F_{0,0}$ to $F_{0,256}$, from which the differences in density of adjacent picture elements $\Delta$ are calculated.

$$\Delta_j = F_{0,j-1} - F_{0,j}$$

The absolute values of these differences are totalized along the line 0 to obtain the sum $X_0$ as follows.

$$X_0 = \Sigma_j \Delta_j = \Sigma_j |F_{0,j-1} - F_{0,j}|$$

wherein $\Sigma_j$ is the sum of the differences where j = 1 to 255.

Arithmetic operations are repeated for every lines i = 1 to 31 to obtain the total sum $\Sigma_i X_i$ which is divided by the number of differences $((L_x - 1) \times L_y = p_x$; wherein $L_x$ and $L_y$ stands for the numbers of picture elements respectively along the main and subsidiary scanning directions).

The average X of the differences may be obtained as follows (Step 102).

$$X = (1/p_x)\Sigma_i X_i$$

Similarly, the averge Y of the differences along the subsidiary scanning direction may be obtained from the following equation (Step 102).

$$X = (1/p_y)\Sigma_j Y_j;$$

wherein

$$Y_j = \Sigma_i |F_{i-1,J} - F_{i,j}|$$
$$P_y = (L_y - 1)L_x$$

The topographical feature of the inspected surface, such as the directivity of the topographical feature, can be discriminated by comparing the thus obtained values X and Y. In detail, when the value (Y - X) is larger than the pre-set threshold TH(X), the difference along the Y direction (row direction) is larger so that it is discriminated that the topographical feature of the inspected surface is characterized by the change in texture or formation extending along the X direction (line direction). On the contrary, when the value (Y - X) is smaller than the pre-set threshold TH(Y), the difference along the X direction (line direction) is larger so that it is discriminated that the topographical feature of the inspected surface is characterized by the change in texture or formation extending along the Y direction (row direction) (Steps 108 and 110).

The differentiation filter $\Delta_x f$ is selectively used when the topographical feature of the inspected surface is characterized by the change in texture or formation extending along the X direction (line direction), whereas the differentiation filter $\Delta_y f$ is selectively used when the topographical feature of the inspected surface is characterized by the change in texture or formation extending along the Y direction (row direction). (Steps 112 and 114).

When the value (Y - X) is TH(X) ≤ Y - X ≤ TH(Y), it is discriminated that the topographical feature is characterized by changes in texture extending along both of the X and Y directions at a substantially equal extent (Step 116). In such a case, the signal $a_5$ is differentiated two-dimensionally. In other words, the sum of the both differentiation filters $\Delta_x f$ and $\Delta_y f$ is used (Step 118).

Although the absolute values of differences in density between the picture elements located adjacent with one another along the X and Y directions are used in discrimination of the topographical feature in the aforementioned embodiment, the present invention is not limited only to the aforementioned embodiment. For example, the absolute values of differences each obtained by comparing a difference between a certain picture element and a picture element spaced by one or more picture element from said certain picture elements may be totalized along the X and Y directions to determine the sums X and Y. By this processing, the topographical feature of the inspected surface is enhanced or emphasized by increasing the sums of the absolute values X and Y when the densities of the picture elements are gently changed.

It is also possible to obtain square numbers of the differences in density of adjacent picture elements or the picture elements spaced by predetermined number of picture elements, and the sums of these square numbers are calculated along the X and Y directions so that the thus calculated sum X is compared with the sum Y. By using square numbers of differences, unclear or little change in topographical feature can be discriminated.

Furthermore, it is possible to obtain defferences between the densities of respective picture elements and the average density of all picture elements within the inspected area, and the sums X and Y used in discrimination of topographical feature are calculated by totalizing the absolute values or square numbers of the differences.

The values of the sums X and Y obtained by totalizing the differences between respective picture elements or the differences between the densities of respective picture elements and the average density are the parameters indicating the clearness and significance of the topographical feature. Accordingly, an optimum differentiation filter having a variable mask size may be selected in consideration of these parameters. For instance, when the sums X and Y are small, it is judged that the topographical feature is vague or unclear or the pattern of the topographical feature is large. Under such circumstances, the thresholds $v_1$ and $v_2$ used in the background noise discriminator 90 are decreased, or the mask size (which defines the number of thresholds) of spatial filter is expanded to 5 x 5 or 7 x 7, or the picture element number threshold is increased or decreased.

After the topographical feature of the inspected surface has been discriminted by the operations as described above, the optimum differentiation filter used in discrimintion of the particular topographical feature is selected from the differentiation filter memory 102 so that the subsequent defect discrimination operation (Step 120 in Fig. 9) is effected while using the thus selected differentiation filter in the spatial filter 78.

As will be appreciated from the foregoing, since the topographical feature of the inspected surface is discriminated while using the differences in density of respective picture elements to select an optimum differentiation filter so that the image density signals are subjected to spatial-filtering while using the optimum differentiation filter and then the differentiated signals are compared with a pre-set threshold to detect any defects, the defects can be detected at a high sensitivity.

The optimum differentiation filter may be selected automatically from plural differentiation filters having different directions of differentiation, while discriminating the directivity of the topographical feature. In discrimination of the topographical feature, the absolute values of the differences between the densities of respectsive picture elements and the average density or the square numbers of differences may be totalized.

Second Embodiment;

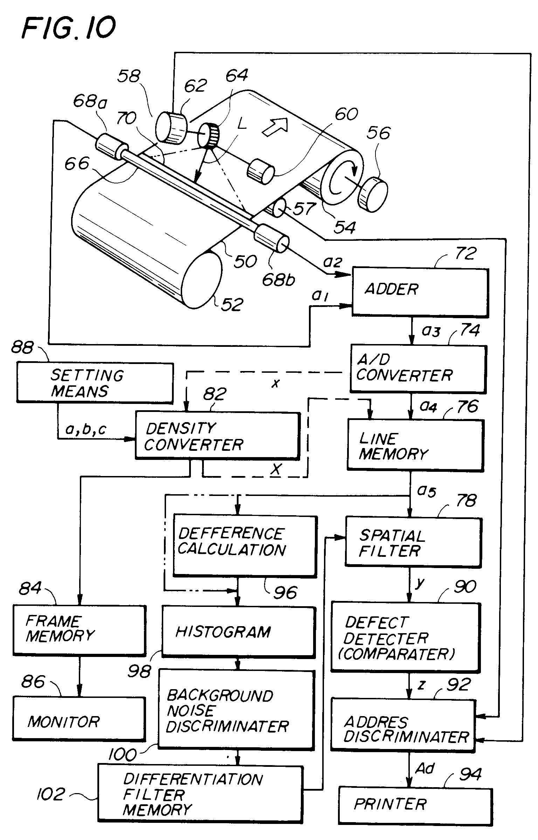

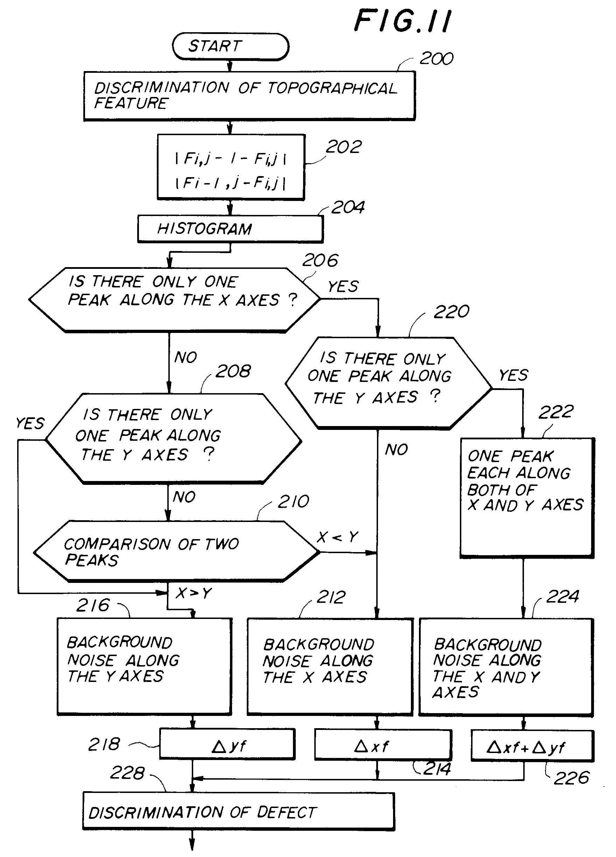

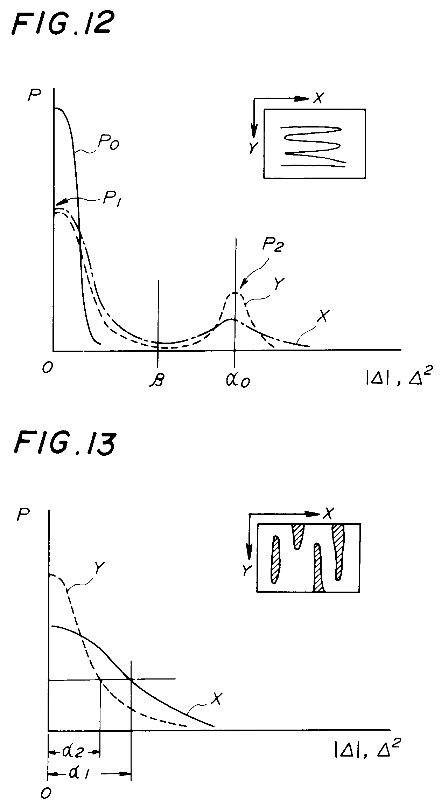

Fig. 10 is a block diagram showin a second embodiment of the invention; Fig. 11 is a block diagram showing the operation sequence processed through the second embodiment; and Figs. 12 and 13 are graphs each showing histogram patterns used for the discrimination of topograpical feature.

This second embodiment is the same as the first embodiment except that the operation sequence (Fig. 11) for selecting the optimum differentiation filter used in the spatial-filter 78 is different from the operation sequence processed through the first embodiment. Accordingly, the same parts are designated by the same reference numerals and the description thereof and the operation steps similar to those in the first embodiment will not be repeated.

Similarly as in the first embodiment, particularly shown in Fig. 7, the topographical feature of the inspected surface is discriminated by scanning a predetermined area A containing (n x m) picture elements located at the substantial center of the fore end region of the test piece 50. The number n of the picture elements along the main scanning direction (X direction) is set to, for example, 256, and the number m of the picture elements (i.e. the scanned row number) along the subsidiary scanning direction (Y direction) is set to, for example, 32. The line number M which can be stored in the line memory 76 is larger than or equal to the line number m. The density of the picture element (p, q) within this area A is indicated by $F_{p,q}$.

In the background noise discrimination mode (Step 200 in Fig. 11), the density F(m, n) of a specific picture element within the area A is read from the line memory 76, and the absolute values of differences in density, namely the absolute values of differences in density $|\Delta|$ of the specific picture element and the adjacent picture elements aligned along the main and subsidiary scanning directions, are determined by a difference calculator 96 shown in Fig. 10 (Step 202). The arithmetic operation for the determination of difference in density along the main scanning direction is shown in Fig. 8.

The densities F of respective picture elements 0 to 255 along the line 0 ($i = 0$) are represented by $F_{0,0}$ to $F_{0,256}$, from which the absolute values $|\Delta_j|$ of differences in density $\Delta_j$ of adjacent picture elements are calculated (Step 202).

$$|\Delta_j| = (F_{0,j-1} - F_{o,j}|$$

Arithmetic operations are repeated for every picture elements $j = 1$ to 155 and for every lines $i = 1$ to 31. The number of the differences obtained by the repeated arithmetic operations are $(L_x - 1) \times L_y = p_x$ (wherein $L_x$ and $L_y$ stands for the numbers of picture elements respectively along the main and subsidiary scanning directions).

A histograms X (Figs. 12 and 13) are drawn by a histogram means 98 while plotting these $p_x$ numbers of the absolute values $|\Delta_j|$ (Step 204).

Similarly, the absolute values $|\Delta_i|$ of the diffrences $\Delta_i$ along the subsidiary scanning direction are calculated by the difference calculator 96 (Step 202). The number of the thus calculated values is $P_y = (L_y - 1)L_x$. By plotting the thus obtained values, histograms Y (Figs. 12 and 13) are drwan by the histogram means 98 (Step 204).

The topographical feature of the inspected surface, such as the directivity of the topographical feature, can be discriminated by comparing these histograms X and Y in the background noise discriminator 100. For instance, when the topographical feature is characterized by a long and clear change in texture or formation extending along the X direction (main scanning direction) as shown in Fig. 12, each of the histograms X and Y has a first peak $P_1$ at which the difference $\Delta$ is 0 and a second peak $P_2$ at a position ($|\Delta| = \alpha_0$) where a significant contrast in the contour of the topographical feature appears. The ordinate of the graph of Fig. 12 denotes the frequency of the changes in the topographical feature. The difference $|\Delta_i|$ along the Y direction traverses the contour of the topographical feature at a time smaller than the time along the X direction so that the height of the second peak $P_2$ of the histogram Y is higher than the height of the second peak $P_2$ of the histogam X. Accordingly, by comparing the second peak $P_2$ of the histogram Y with the second peak $P_2$ of the histogram X, the directivity of the topographical feature can be discriminated. Meanwhile, the first peak $P_0$ shown by the real line in Fig. 12 appears when the inspected surface has no significant topographical feature.

Presence or absence of the second peaks $P_2$ is discriminated by the Steps 206 and 208 in Fig. 11. When second peaks $P_2$ are present, the peaks $P_2$ of the histograms X and Y are compared with each other. When the peak $P_2$ of the histogram Y is higher than the peak $P_2$ of the histogram X (X<Y), it is judged that the directivity of the topographical feature extends along the X direction (Step 212), and a differentiation filter $\Delta_x f$ for differentiating along the X direction is selected (Step 214).

On the contrary, when the peak $P_2$ of the histogram X is higher than the peak $P_2$ of the histogram Y, it is judged that the directivity of the topographical feature extends along the Y direction (Step 216), and a differentiation filter $\Delta_y f$ for differentiating along the Y direction is selected (Step 218).

When only the histogram Y has the second peak $P_2$ and the histogram X has no second peak (Steps 206 and 220), it is judged that the topographical feature has a directivity along the X direction (Step 212); whereas when only the histogram X has the second peak $P_2$ and the histogram Y has no second peak (Steps 206 and 208), it is judged that the topographical feature has a directivity along the Y direction (Step 216).

When both of the histograms X and Y has only the first peak $P_1$ (Step 222), it is judged that the topographical feature extends two-dimensionally at a substantially equivalent extent along both directions (224). In such a case, a differentiation filter ($\Delta_x f + \Delta_y f$) for effecting differentiation along both directions is selected (Step 226).

Meanwhile, when clear peaks $P_1$, $P_2$ appear as in the case shown in Fig. 12, a threshold $\beta$ is set to have a value intermediate of these peaks $P_1$ and $P_2$ and the threshold value is added to or subtract from the average density to use as the density threshold $v_1$ or $v_2$ in the defect detector 90.

In case where the change in contrast of the topographical feature is rather small and the contours of the portions forming the topographical feature are vague as shown in Fig. 13, the widths of the first peaks $P_1$ of the histograms X and Y are broadened. The width of the peak $P_1$ of the histogram X is broader than the width of the peak $P_1$ of the histogram Y in the illustrated embodiment. By comparing the width $\alpha_1$ of the peak $P_1$ of the histogram X with the width $\alpha_2$ of the peak $P_1$ of the histogram Y, the directivity of the topographical feature can be discriminated.

Although the absolute values of differences in density between the picture elements located adjacent with one another along the X and Y directions are used in discrimination of the topographical feature in the aforementioned embodiment, the present invention is not limited only to the aforementioned embodiment. For example, the absolute values of differences each obtained by comparing a difference between a certain picture element and a picture element spaced by one or more picture element from said certain picture elements may be totalized along the X and Y directions to draw the histograms X and Y. By this processing, the topographical feature of the inspected surface is enhanced or emphasized by increasing the differences and the absolute values of the differences when the densities of the picture elements are gently changed.

The histograms X and Y may also be drawn by plotting the numbers of the differences in density of adjacent picture elements or the picture elements spaced by predetermined number of picture elements, so that the thus drawn histograms X and Y are compared with each other. By using square numbers of differences in the preparation of the histograms X and Y, unclear or little change in topographical feature can be enhanced to facilitate the operation of discriminating the topographical feature.

Furthermore, it is possible to obtain defferences between the densities of respective picture elements and the average density, and the histograms X and Y used in discrimination of the topographical feature are drawn by plotting the thus obtained differences.

In the illustrated embodiment, the topographical feature of the inspected surface is discriminated while referring to the number of the peaks appearing in the histogram, heights of the second peaks, and the widths of the first peaks. However, the present invention is not limited only to the use of such parameters. Within the scope of the invention, the topographical feature may be discriminated by using other parameters, such as the positions or areas of the peaks appearing in the histograms.

The extents of the widths appearing in the patterns of the histograms X and Y, which are obtained by plotting the differences between respective picture elements or the differences between the densities of respective picture elements and the average density, can otherwise been used as the parameters indicating the clearness and significance of the topographical feature. Accordingly, an optimum differentiation filter having a variable mask size may be selected in consideration of these parameters. For instance, when the widths of the first peaks $P_1$ of the histograms X and Y are broadened and the second peaks $P_2$ are not clear, it is judged that the topographical feature is vague or unclear or the pattern of the topographical feature is large. Under such circumstances, the thresholds $v_1$ and $v_2$ used in the background noise discriminator 90 are decreased, or the mask size of the differentiation filter is expanded to 5 x 5 or 7 x 7, or the picture element number threshold is increased or decreased.

After the topographical feature of the inspected surface has been discriminted by the operations as described above, the optimum differentiation filter used in discrimintion of the particular topographical feature is selected from the differentiation filter memory 102 so that the subsequent defect discrimination operation (Step 228 in Fig. 11) is effected while using the thus selected differentiation filter in the spatial filter 78.

As will be appreciated from the foregoing, since the topographical feature of the inspected surface is discriminated while referring to the patterns of histograms, which are separately drawn by plotting the differences in density of the picture elements along the main and subsidiary directions, to select an optimum differentiation filter so that the image density signals are subjected to spatial-filtering while using the optimum differentiation filter and then the differentiated signals are compared with a pre-set threshold to detect any defects, the defects can be detected at a high sensitivity.

The optimum filter may be selected manually or automatically from plural differentiation filters having different directions of differentiation, while discriminating the directivity of the topographical feature.

In discrimination of the topographical feature, the absolute values of the differences between the densities of respective picture element may be used to draw the histograms. Alternatively, the histograms may be drawn by plotting the differences between the average density of picture elements contained in a proper area and the density of each picture element, or the square numbers of the differences.

The topographical feature may be discriminated by comparing either one parameters, including the number of peaks, the positions of peaks, the heights of peaks, the areas of peaks and the widths of peaks, appearing in the histograms.

Although each of the first and second embodiments has been incorporated with a so-called flying spot type scanning device wherein the surface of the test piece is scanned by a laser beam which is reflected by the scanned surface, it is possible to replace the flying spot type scanning device by a so-called flying image type device wherein the test piece is scanned by a linear light source extending in the widthwise direction of the test piece and the reflected light is passed through a rotary mirror to a photo-receiver, or a device in which the images are read by a line sensor or an area sensor.

Although each of the illustrated embodiments is a system for detecting defective portions appearing on the surface of the test piece, the present invention is not limited only to the system for the inspection of the surface but includes a system for detecting internal defects. For example, a system for detecting internal defects within a steel plate by the utilization of magneto-optical effect may be conceived within the scope of the invention. In this alternation, the test piece is magnetized in an AC magnetic field, and the leaked magnetic field from the defective portion is detected by measuring the change in polarization of the reflected light.

**Claims**

1. A defect inspection system for scanning a surface of a test piece to pick up image signals from which any defects are detected, which comprises:

   (a) an A/D converter for converting analog image signals into digital signals, said analog image signals being picked up by scanning said surface of said test piece;

   (b) a background noise discriminator for receiving said digital signals from said A/D converter to find the differences in density of respective image signals and for discriminating the topographical feature of the inspected surface of said test piece while referring to said differences in density of respective image signals;

   (c) a spatial filter for spatial-filtering said digital signals through an optimum differentiation filter which is incorporated to have a direction of differentiation to decrease the background noise signals due to the presence of said topographical feature discriminated by said background noise discriminator; and

   (d) a defect detector for comparing the differentiated digital signals with a pre-set threshold to detect defects.

2. The defect inspection system of claim 1, further comprising a differentiation filter memory for storing plural differentiation filters for differentiating said digital signlas along difference directions; and wherein said background noise discriminator selects said optimum differentiaion filter to be used in said spatial filtering operation with reference to the topographical feature discriminated by said background noise discriminator.

3. The defect inspection system of claim 1, wherein said background noise discriminator compares, in discrimination of the topographical feature, the sum of the absolute values of the differences in density of adjacent picture elements existing in a certain range of the inspected area along the main scanning direction with the sum of the absolute values of the differences in density of adjacent picture elements existing in said certain range of the inspected area along the subsidiary scanning direction.

4. The defect inspection system of claim 1, wherein said background noise discriminator compares, in discrimination of the topographical feature, the sum of the square numbers of the differences in density of adjacent picture elements existing in a certain range of the inspected area along the main scanning direction with the sum of the square numbers of the differences in density of adjacent picture elements existing in said certain range of the inspected area along the subsidiary scanning direction.

5. The defect inspection system of claim 1, wherein said background noise discriminator compares, in discrimination of the topographical feature, the sum of the absolute values of the differences in density of the picture elements existing in a certain range of the inspected area and spaced from one another at a pre-set number of picture elements along the main scanning direction with the sum of the absolute values of the differences in density of the picture elements existing in said certain range of the inspected area and spaced from one another at a pre-set number of picture elements along the subsidiary scanning direction.

6. The defect inspection system of claim 1, wherein said background noise discriminator compares, in discrimination of the topographical feature, the sum of the absolute values of the differences in density along the main scanning direction between each picture element and an average density of all picture elements within a certain range of the inspected area with the sum of the absolute values of the differences in density along the subsidiary scanning direction between each picture element and an average density of all picture elements within a certain range of the inspected area.

7. The defect inspection system of claim 1, wherein said background noise discriminator compares, in discrimination of the topographical feature, the sum of the square numbers of the differences in density of the picture elements existing in a certain range of the inspected area and spaced from one another at a pre-set number of picture elements along the main scanning direction with the sum of the square numbers of the differences in density of the picture elements existing in said certain range of the inspected area and spaced from one another at a pre-set number of picture elements along the subsidiary scanning direction.

8. The defect inspection system of claim 1, wherein said background noise discriminator compares, in discrimination of the topographical feature, the sum of the square numbers of the differences in density between each picture element and an average density of all picture elements within a certain range of the inspected area along the main scanning direction with the sum of the square numbers of the differences in density between each picture element and an average density of all picture elements within a certain range of the inspected area along the subsidiary scanning direction.

9. A defect inspection system for scanning a surface of a test piece to pick up image signals from which any defects are detected, which comprises:

(a) an A/D converter for converting analog image signals into digital signals, said analog image signals being picked up by scanning said surface of said test piece;

(b) a difference calculator for receiving said digital signals from said A/D converter to find the differences in density of respective picture elements within a certain range of the inspected area along the main scanning direction and along the subsidiary scanning direction;

(c) histogram means for drawing the histograms of the differences in density of respective picture elements along the main scanning direction and along the subsidiary scanning direction;

(d) a background noise discriminator for discriminating the topographical feature of the inspected surface of said test piece by referring to said histograms;

(e) a spatial filter for spatial-filtering said digital signals through an optimum differentiation filter which is incorporated to have a direction of differentiation to decrease the background noise signals due to the presence of said topographical feature discriminated by said background noise discriminator; and

(f) a defect detector for comparing the differentiated digital signals with a pre-set threshold to detect defects.

10. The defect inspection system of claim 9, further comprising a differentiation filter memory for storing plural differentiation filters for differentiating said digital signlas along difference directions; and wherein said background noise discriminator selects said optimum differentiaion filter to be used in said spatial filtering operation with reference to the topographical feature discriminated by said background noise discriminator.

11. The defect inspection system of claim 9, wherein said difference calculator calculates the absolute values of the differences in density of adjacent picture elements, and wherein said histogram means draws the histogams of the absolute values of the differences in density of adjacent picture elements.

12. The defect inspection system of claim 9, wherein said difference calculator calculates of the absolute values of the differences in density of the picture elements existing in a certain range of the inspected area and spaced from one another at a pre-set number of picture elements, and wherein said histogram means draws the histograms of the absolute values of the differences in density.

13. The defect inspection system of claim 9, wherein said difference calculator calculates of the absolute values of the differences in density between each picture element and the average density of all picture elements, and wherein said histogram means draws the histograms of said absolute values of the differences in density between each picture element and the average density of all picture elements.

14. The defect inspection system of claim 9, wherein said difference calculator calculates the sqaure numbers of the differences in density of adjacent picture elements, and wherein said histogram means draws the histograms of the square numbers of the differences in density of adjacent picture elements.

15. The defect inspection system of claim 9, wherein said difference calculator calculates the square numbers of the differences in density of the picture elements existing in a certain range of the inspected area and spaced from one another at a pre-set number of picture elements and wherein said histogram means draws the histograms of said square numbers.

16. The defect inspection system of claim 9, wherein said difference calculator calculates the sqaure numbers of the differences in density between each picture element and the average density of all picture elements, and wherein said histogram means draws the histograms of the square numbers.

17. The defect inspection system of claim 9, wherein said background noise discriminator discriminate the topographical feature by referring to at least one of the parameters selected from the group consisting of the numbers of peaks, the positions of peaks, the heights of peaks, areas of peaks and widths of peaks of the histograms drawn by scanning along the main and subsidiary scanning directions.

18. The defect inspection system of claim 10, wherein said background noise discriminator discriminate the topographical feature by referring to at least one of the parameters selected from the group consisting of the numbers of peaks, the positions of peaks, the heights of peaks, areas of peaks and widths of peaks of the histograms drawn by scanning along the main and subsidiary scanning directions.

19. The defect inspection system of claim 11, wherein said background noise discriminator discriminate the topographical feature by referring to at least one of the parameters selected from the group consisting of the numbers of peaks, the positions of peaks, the heights of peaks, areas of peaks and widths of peaks of the histograms drawn by scanning along the main and subsidiary scanning directions.

20. The defect inspection system of claim 12, wherein said background noise discriminator discriminate the topographical feature by referring to at least one of the parameters selected from the group consisting of the numbers of peaks, the positions of peaks, the heights of peaks, areas of peaks and widths of peaks of the histograms drawn by scanning along the main and subsidiary scanning directions.

21. The defect inspection system of claim 13, wherein said background noise discriminator discriminate the topographical feature by referring to at least one of the parameters selected from the group consisting of the numbers of peaks, the positions of peaks, the heights of peaks, areas of peaks and widths of peaks of the histograms drawn by scanning along the main and subsidiary scanning directions.

22. The defect inspection system of claim 14, wherein said background noise discriminator discriminate the topographical feature by referring to at least one of the parameters selected from the group consisting of the numbers of peaks, the positions of peaks, the heights of peaks, areas of peaks and widths of peaks of the histograms drawn by scanning along the main and subsidiary scanning directions.

23. The defect inspection system of claim 15, wherein said background noise discriminator discriminate the topographical feature by referring to at least one of the parameters selected from the group consisting of the numbers of peaks, the positions of peaks, the heights of peaks, areas of peaks and widths of peaks of the histograms drawn by scanning along the main and subsidiary scanning directions.

24. The defect inspection system of claim 16, wherein said background noise discriminator discriminate the topographical feature by referring to at least one of the parameters selected from the group consisting of the numbers of peaks, the positions of peaks, the heights of peaks, areas of peaks and widths of peaks of the histograms drawn by scanning along the main and subsidiary scanning directions.

25. A process for scanning a surface of a test piece to pick up image signals from which any defects are detected, comprising the steps of:
(a) converting analog image signals picked up by scanning said surface of said test piece into digital signals;
(b) discriminating the topographical feature of the inspected surface of said test piece by referring to the differences in density of respective picture elements, said differences in density of respective picture elements being calculated from said digital signals;
(c) defining an optimum differentiation filter correspondingly to the topographical feature discriminated by the step (b);
(d) subjecting said digital signals to spatial-filtering while using said optimum differentiation filter defined by the step (c) to obtain spatially filtered digital signals; and
(e) comparing said spatially filtered digital signals with a pre-set threshold to detect any defects.

26. A process for scanning a surface of a test piece to pick up image signals from which any defects are detected, comprising the steps of:
(a) converting analog image signals picked up by scanning said surface of said test piece into digital signals;

(b) calculating the differences in densisty of respective picture elements along the main scanning direction and the differences in density of respective picture elements along the subsidiary scanning direction while referring to said digital signals;

(c) drawing histograms of said differences calculated by the step (b);

(d) discriminating the topographical feature of the inspected surface by referring to said histograms drawn by the step (c) along both of the main and subsidiary directions;

(e) defining an optimum differentiation filter correspondingly to the topographical feature discriminated by the step (d);

(f) subjecting said digital signals to spatial-filtering while using said optimum differentiation filter defined by the step (e) to obtain spatially filtered digital signals; and

(g) comparing said spatially filtered digital signals with a pre-set threshold to detect any defects.

# FIG. 1

ADDER — 72

A/D CONVERTER — 74

LINE MEMORY — 76

SETTING MEANS — 88

DENSITY CONVERTER — 82

FRAME MEMORY — 84

BACKGROUND NOISE DISCRIMINATER

SPATIAL FILTER — 78

MONITOR — 86

DIFFERENTIATION FILTER MEMORY — 102

DEFECT DETECTER (COMPARATER) — 90

ADDRESS DISCRIMINATER — 92

PRINTER — 94

# FIG.2

# FIG.3

# FIG.4

3X3 AREAS

× INTEGRATION

SPATIAL FILTER F

OUTPUT

# FIG.5

| / | 0 | -/ |
|---|---|---|
| / | 0 | -/ |
| / | 0 | -/ |

$\Delta xf$

| / | / | / |
|---|---|---|
| 0 | 0 | 0 |
| -/ | -/ | -/ |

$\Delta yf$

# FIG.6

# FIG.7

# FIG.8

$$X_0 = \Sigma j |F_0, j-1 - F_0, j|$$

$$X_1 = \Sigma j |F_1, j-1 - F_1, j|$$

$$X_{31} = \Sigma j |F_{31}, j-1 - F_{31}, j|$$

18

# FIG. 9

START

DISCRIMINATION OF TOPOGRAPHICAL FEATURE — 100

$X = (1/Px) \, \Sigma_i X_i$
$Y = (1/Py) \, \Sigma_j Y_j$ — 102

104 — $Y - X > TH \ (X)$ ?    NO

YES

106 — LINE (X) DIRECTION

108 — $Y - X < TH \ (Y)$ ?    NO

YES

110 — ROW (Y) DIRECTION

116 — X & Y DIRECTIONS

$\triangle xf$ — 112

114 — $\triangle yf$

$\triangle xf + \triangle yf$ — 118

120 — DISCRIMINATION OF DEFECT

# FIG.10

# FIG.11

```
                    START                          ⌐ 200

        ┌─────────────────────────────────┐
        │ DISCRIMINATION OF TOPOGRAPHICAL  │
        │ FEATURE                          │
        └─────────────────────────────────┘

              ┌──────────────────┐   ⌐ 202
              │ | Fi,j - 1 - Fi,j |│
              │ | Fi-1,j - Fi,j | │
              └──────────────────┘

                ┌──────────────┐   ⌐ 204
                │  HISTOGRAM   │
                └──────────────┘
                                 ⌐ 206
```

$$| F_{i,j-1} - F_{i,j} |$$
$$| F_{i-1,j} - F_{i,j} |$$

**IS THERE ONLY ONE PEAK ALONG THE X AXES ?** — YES

**NO** — 208

**IS THERE ONLY ONE PEAK ALONG THE Y AXES ?** — 220

**IS THERE ONLY ONE PEAK ALONG THE Y AXES ?** — YES — 222

**YES**

**NO**

**ONE PEAK EACH ALONG BOTH OF X AND Y AXES**

**NO** — 210

**COMPARISON OF TWO PEAKS** — X < Y

X > Y — 212

216 —

**BACKGROUND NOISE ALONG THE Y AXES**

**BACKGROUND NOISE ALONG THE X AXES**

224

**BACKGROUND NOISE ALONG THE X AND Y AXES**

218 — $\Delta yf$

$\Delta xf$ — 214

$\Delta xf + \Delta yf$ — 226

228 —

**DISCRIMINATION OF DEFECT**

# FIG. 12

# FIG. 13